# FASCICULE DE BREVET EUROPEEN

(11) **EP 0 765 881 B1**
(45) Date de publication et mention de la délivrance du brevet: **30.05.2001**
(21) Numéro de dépôt: 96112400.5
(22) Date de dépôt: 01.08.1996
(51) Int. Cl.: C07F 7/18, C08F 10/00, C08F 4/646

(54) **Alcoxysilacycloalcanes, leur procédé de préparation et leur utilisation pour la polymérisation des oléfines**
Alkoxysilacycloalkane, deren Herstellung und Verwendung bei der Olefinpolymerisation
Alkoxysilacycloalkanes, their preparation and use in the polymerisation of olefin

(30) Priorité: 20.09.1995 FR 9511025
(43) Date de publication de la demande: 02.04.1997
(73) Titulaire: Atofina, 92800 Puteaux (FR)
(72) Inventeur: Grison, Claude, 54500 Vandoeuvre les Nancy (FR); Barthel, Valérie, 68116 Guewenheim (FR); Coutrot, Philippe, 54420 Saulyures les Nancy (FR); Brusson, Jean-Michel, 64320 Idron (FR); Brun, Claude, 64320 Idron (FR); Meynard, Corinne, 40100 Dax (FR)

(56) Documents cités:
- EP-A- 0 348 693
- EP-A- 0 665 243
- FR-A- 2 069 504
- US-A- 3 694 427
- CHEMICAL ABSTRACTS, vol. 46, no. 6082, 1952 Columbus, Ohio, US; abstract no. 6082i, KUMADA, M.: "SYNTHESIS OF SOME ORGANOSILICON COMPOUNDS BY THE GRIGNARD METHOD" colonne 6082; XP002004567 & J. INST. POLYTECH. OSAKA CITY UNIV., SER. C., 2, no. 1, 1951, pages 11-18,
- CHEMICAL ABSTRACTS, vol. 50, no. 8270, 1956 Columbus, Ohio, US; abstract no. 8270e, SMITH, B.: "BOND REFRACTIONS, BOND DISPERSIONS, AND RING REFRACTIONS IN CYCLOPOLYMETHYLENESILANES" colonne 8270; XP002004568 & ACTA CHEM. SCAND., vol. 9, 1955, pages 1286-1290,

## Description

L'invention concerne des alcoxysilacycloalcanes, leur procédé de préparation et leur utilisation en tant que donneur d'électrons dans les procédés de polymérisation ou copolymérisation des oléfines comme le propylène ou l'éthylène.

Une polyoléfine présentant un trop fort taux de solubles dans l'heptane peut avoir tendance à coller, est donc difficile à convoyer, et est de ce fait peu adaptée aux applications industrielles. De plus, dans le domaine de l'alimentaire, la présence de solubles dans une polyoléfine destinée à entrer en contact avec des aliments, est jugéee indésirable. Pour ces raisons, par exemple, le polypropylène isotactique présente de préférence un indice d'insolubilité dans l'heptane (représenté par HI de l'expression "heptane insoluble") supérieur à 80 % en poids.

La demande de brevet EP 665 243 enseigne l'utilisation de certains silanes comme donneur d'électrons en polymérisation d'oléfines.

La demande de brevet EP 250229 enseigne que l'utilisation de certains silanes lors de la polymérisation d'oléfines permet de diminuer le taux de solubles dans l'hexane de la polyoléfine obtenue.

L'article de R. West, Journal of the American Society (1954) 76, 6012 décrit un mode de préparation du 1,1-diméthoxysilacyclohexane. Cette préparation fait intervenir de nombreuses étapes et passe par la formation d'un chlorosilacycloalcane particulièrement délicat à manipuler et facilement dégradable.

Le procédé de la présente invention est particulièrement simple, fait intervenir des matières premières faciles d'accès et relativement stables, et ne fait pas intervenir de chlorosilacycloalcane. La stabilité des produits mis en oeuvre limite les risques de réactions secondaires, ce qui va dans le sens d'une meilleure pureté des produits finalement préparés.

La présence d'alcoxysilacycloalcanes dans le milieu de polymérisation ou copolymérisation d'au moins une oléfine se traduit par une augmentation sensible de la productivité en polyoléfine et par une augmentation sensible du HI de ladite polyoléfine. De plus, l'alcoxysilacycloalcane joue un rôle de protecteur de morphologie dans les procédés de polymérisation ou copolymérisation en suspension et en phase gazeuse. Ceci signifie que, pour ces procédés dits hétérogènes, le polymère ou copolymère formé est une meilleure réplique morphologique de la composante catalytique solide de départ si un alcoxysilacycloalcane est introduit dans le milieu de polymérisation ou copolymérisation comme donneur externe d'électrons.

Le procédé selon l'invention comprend l'étape de réaction entre un dibromure d'alkylène dimagnésium de formule Br-Mg-A-Mg-Br dans laquelle A est un radical bivalent alkylène, éventuellement substitué, par exemple par un radical alkyle comprenant par exemple de 1 à 6 atomes de carbone, ledit radical alkylène comprenant, le ou les éventuels substituants étant exclus, de 4 à 7 atomes de carbone, et un tétraalcoxysilane de formule (OR¹)(OR²)(OR³)(OR⁴)Si dans laquelle R¹, R², R³ et R⁴, pouvant être identiques ou différents représentent des radicaux hydrocarbonés, saturés et/ou insaturés, linéaires ou ramifiés pouvant comprendre un cycle.

De préférence, les radicaux R¹, R², R³ et R⁴ sont des radicaux alkyles comprenant de 1 à 6 atomes de carbone.

La réaction peut être réalisée dans un solvant, lequel présente de préférence un caractère de base de Lewis comme c'est le cas des éthers. Le solvant peut par exemple être le diéthyléther.

La quantité de solvant inerte utilisée peut par exemple être telle qu'en supposant le rendement de la réaction égal à 100%, l'alcoxysilacycloalcane formé se retrouve en concentration comprise entre 0,05 et 2 moles/litre.

La réaction peut être réalisée par exemple entre 0 et 50°C pendant 10 min à 12 heures, le cas échéant sous pression si la volatilité des espèces mises en oeuvre le nécessite compte tenu de la température choisie. La réaction étant généralement exothermique, il est préférable de mettre en contact le dibromure et le tétraalcoxysilane progressivement et sous agitation de façon à conserver la maîtrise de la température du milieu. La réaction mène à la formation d'au moins un alcoxysilacycloalcane de formule 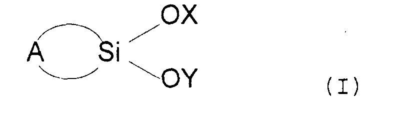 dans laquelle X et Y représentent des groupements faisant partie du groupe des radicaux R¹, R², R³ et R⁴ et dans laquelle A conserve là signification précédemmment donnée. Le cycle de l'alcoxysilacycloalcane comprend donc un atome de silicium et un nombre d'atomes de carbone égal au nombre d'atomes de carbone que comprenait le radical alkylène A, les éventuels substituants dudit radical alkylène étant exclus.

Les alcoxysilacycloalcanes pour lesquels A est un radical alkylène comprenant au moins un substituant alkyle sont également un objet de la présente invention.

A titre d'exemple, le tableau 1 ci-dessous mentionne quelques alcoxysilacycloalcanes qu'il est possible de préparer par le procédé selon l'invention par réaction du tétraméthoxysilane avec un dibromure d'alkylène dimagnésium, en fonction de la nature du radical bivalent alkylène A compris dans le dibromure d'alkylène dimagnésium.

**Tableau 1**

| **Nature de A** | **Alcoxysilacycloalcane formé** |
|---|---|
| tétraméthylène | 1,1-diméthoxysilacyclopentane |
| 1-méthyltétraméthylène | 1,1-diméthoxy-2-méthylsilacyclopentane |
| 1-éthyltétraméthylène | 1,1-diméthoxy-2-éthylsilacyclopentane |
| 1-n-propyltétraméthylène | 1,1-diméthoxy-2-n-propylsilacyclopentane |
| 1-isopropyltétraméthylène | 1,1-diméthoxy-2-isopropylsilacyclopentane |
| 1-n-butyltétraméthylène | 1,1-diméthoxy-2-n-butylsilacyclopentane |
| pentaméthylène | 1,1-diméthoxysilacyclohexane |
| 1-méthylpentaméthylène | 1,1-diméthoxy-2-méthylsilacyclohexane |
| 1-éthylpentaméthylène | 1,1-diméthoxy-2-éthylsilacyclohexane |
| 1-n-propylpentaméthylène | 1,1-diméthoxy-2-n-propylsilacyclohexane |
| 1-isopropylpentaméthylène | 1,1-diméthoxy-2-isopropylsilacyclohexane |
| 1-n-butylpentaméthylène | 1,1-diméthoxy-2-n-butylsilacyclohexane |
| 2,3-diméthyltétraméthylène | 1,1-diméthoxy-3,4-diméthylsilacyclopentane |
| 1,4-diméthyltétraméthylène | 1,1-diméthoxy-2,5-diméthylsilacyclopentane |
| hexaméthylène | 1,1-diméthoxysilacycloheptane |

La réaction engendre également la formation de BrMgOZ dans laquelle Z est un radical faisant partie du groupe des radicaux R¹, R², R³ et R⁴. Ce BrMgOZ considéré comme un sous-produit dans le cadre de la présente invention, est généralement solide et peut dans ce cas, être éliminé, par exemple par filtration. L'alcoxysilacycloalcane, après évaporation de l'éventuel solvant utilisé et des éventuels réactifs en excès, peut être purifié par distillation, de préférence sous pression réduite, par exemple comprise entre 1 et 1.10³ mbar.

Le dibromure d'alkylène dimagnésium de formule Br-Mg-A-Mg-Br peut être préparé par exemple par réaction entre un dibromoalcane de formule Br-A-Br et du magnésium en présence d'un solvant, par exemple un éther comme le diéthyléther, par exemple entre 0 et 50°C, le cas échéant sous pression si la volatilité des espèces mises en oeuvre le nécessite, compte tenu de la température choisie.

Les alcoxysilacycloalcanes susceptibles d'être obtenus par le procédé selon l'invention peuvent servir de donneur d'électrons en polymérisation ou copolymérisation d'au moins une oléfine. Par exemple, le silacycloalcane peut être introduit à l'intérieur d'une composante catalytique solide de type Ziegler-Natta et jouer le rôle de donneur interne d'électrons.

Il est également possible de l'utiliser en tant que donneur externe d'électrons dans un milieu de polymérisation ou copolymérisation d'au moins une oléfine de façon à diminuer le taux de solubles dans l'hexane du polymère ou copolymère finalement préparé.

Pour cette dernière application (donneur externe d'électrons), on préfère utiliser un alcoxysilacycloalcane de formule (I) dans laquelle X et Y représentent des radicaux méthyle.

De préférence, l'alcoxysilacycloalcane comprend au moins un substituant alkyle en alpha de l'atome de silicium. Des valeurs de HI particulièrement élevées sont obtenues lorsque le substituant alkyle comprend au moins deux atomes de carbone. Un excellent compromis de propriétés (HI très élevé et généralement forte productivité) est obtenu lorsque le substituant alkyle comprend 2 ou 3 atomes de carbone, comme c'est le cas pour le 1,1-diméthoxy-2-éthylsilacyclopentane, le 1-1-diméthoxy-2-n-propylsilacyclopentane, le 1-1-diméthoxy-2-isopropylsilacyclopentane, le 1,1-diméthoxy-2-éthylsilacyclohexane, le 1,1-diméthoxy-2-n-propylsilacyclohexane, le 1,1 -diméthoxy-2-isopropylsilacyclohexane.

Généralement, l'alcoxysilacycloalcane est introduit à raison de 1.10⁻⁴ à 0,2 millimole par mole d'oléfine à polymériser ou copolymériser. Si l'alcoxysilacycloalcane a été préparé en présence d'un solvant à caractère basique au sens de Lewis, il est recommandé d'éliminer ce dernier avant l'étape de polymérisation ou copolymérisation car celui-ci peut avoir une influence indésirable sur la structure des polymères formés. Par contre, l'alcoxysilacycloalcane peut être introduit en présence par exemple d'un solvant hydrocarboné aliphatique, alicyclique ou aromatique sans caractère basique manifeste au sens de Lewis, comme l'hexane, le cyclohexane ou le toluène.

Généralement, une composante catalytique solide comprenant un métal de transition est introduite dans le milieu de polymérisation ou copolymérisation.

Le métal de transition peut être choisi parmi les éléments des groupes 3b, 4b, 5b, 6b, 7b, 8, les lanthanides, les actinides, de la classification périodique des éléments, tels que définis dans le Handbook of Chemistry and Physics, soixante et unième édition, 1980-1981. Ces métaux de transition sont de préférence choisis parmi le titane, le vanadium, le hafnium, le zirconium ou le chrome.

La composante catalytique solide peut être de type Ziegler-Natta et par exemple se présenter sous la forme d'un complexe comprenant au moins les éléments Mg, Ti et Cl, le titane se trouvant sous forme chloré de Ti^{IV} et/ou de Ti^{III}. La composante solide peut comprendre un donneur ou accepteur d'électron.

Une composante catalytique de type Ziegler-Natta est habituellement le résultat de la combinaison d'au moins un composé du titane, un composé du magnésium, de chlore et éventuellement un composé d'aluminium et/ou un donneur ou accepteur d'électrons ainsi que de tout autre composé utilisable dans ce type de composante.

Le composé du titane est choisi habituellement parmi les composés chlorés du titane de formule Ti-(OR')ₓCl₄₋ₓ dans laquelle R' représente un radical hydrocarboné aliphatique ou aromatique contenant de un à quatorze atomes de carbone, ou représente COR⁵ avec R⁵ représentant un radical hydrocarboné aliphatique ou aromatique contenant de un à quatorze atomes de carbone, et x représente un nombre entier allant de 0 à 3.

Le composé du magnésium est habituellement choisi parmi les composés de formule Mg(OR⁶)ₙCl₂₋ₙ, dans laquelle R⁶ représente l'hydrogène ou un radical hydrocarboné linéaire ou cyclique et n représente un nombre entier allant de 0 à 2.

Le chlore présent dans la composante de type Ziegler-Natta peut provenir directement de l'halogénure de titane et/ou de l'halogénure de magnésium. Il peut également provenir d'un agent chlorant indépendant tel que l'acide chlorhydrique ou un halogénure organique comme le chlorure de butyle.

Suivant la nature du métal de transition inclus dans la composante catalytique solide, il peut être nécessaire d'ajouter au milieu de polymérisation un cocatalyseur capable d'activer le métal de transition de la composante solide. Si le métal de transition est le titane, le cocatalyseur peut être choisi parmi les dérivés organiques de l'aluminium.

Ce dérivé organique de l'aluminium peut être un dérivé de formule R⁷R⁸R⁹Al dans laquelle R⁷, R⁸ et R⁹ pouvant être identiques ou différents, représentent chacun, soit un atome d'hydrogène, soit un atome d'halogène, soit un groupe alkyle contenant de 1 à 20 atomes de carbone, l'un au moins de R⁷, R⁸ ou R⁹ représentant un groupe alkyle. A titre d'exemple de composé adapté, on peut citer le dichlorure ou dibromure ou dihydrure d'éthylaluminium, le dichlorure ou dibromure ou dihydrure d'isobutylaluminium, le chlorure ou bromure ou hydrure de diéthylaluminium, le chlorure ou bromure ou hydrure de di-n-propylaluminium, le chlorure ou bromure ou hydrure de diisobutylaluminium. De préférence aux composés précités, on utilise un trialkylaluminium tel que le tri-n-hexylaluminium, le triisobutylaluminium, le triméthylaluminium, ou le triéthylaluminium.

Le cocatalyseur peut également être un aluminoxane. Cet aluminoxane peut être linéaire, de formule 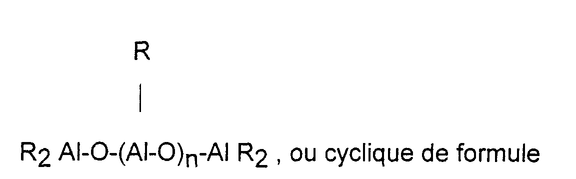 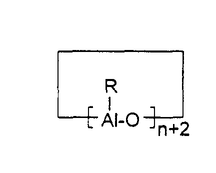 R représentant un radical alkyle comprenant de un à six atomes de carbone, et n étant un nombre entier allant de 2 à 40, de préférence de 10 à 20. L'aluminoxane peut comporter des groupements R de nature différente. De préférence, les groupements R représentent tous des groupements méthyle. Par ailleurs, par cocatalyseur, on entend également les mélanges des composés précités.

Les quantités de cocatalyseur utilisées doivent être suffisantes pour activer le métal de transition. Généralement, lorsqu'un dérivé organique de l'aluminium est utilisé comme cocatalyseur, on en introduit une quantité telle que le rapport atomique de l'aluminium apporté par le cocatalyseur sur le ou les métaux de transition que l'on souhaite activer aille de 0,5 à 10000 et de préférence de 1 à 1000.

Le procédé de polymérisation ou copolymérisation peut être mené en suspension, en solution, en phase gazeuse ou en masse.

Un procédé de polymérisation en masse consiste à réaliser une polymérisation dans l'une au moins des oléfines à polymériser maintenue à l'état liquide ou hypercritique.

Les procédés de polymérisation en solution ou en suspension consistent à réaliser une polymérisation en solution ou en suspension dans un milieu inerte et notamment dans un hydrocarbure aliphatique.

Pour un procédé de polymérisation en solution, on peut utiliser par exemple un hydrocarbure contenant de huit à douze atomes de carbone ou un mélange de ces hydrocarbures. Pour un procédé de polymérisation en suspension, on peut utiliser par exemple le n-heptane, le n-hexane, l'isohexane, l'isopentane ou l'isobutane.

Les conditions opératoires pour ces procédés de polymérisation en masse, en solution, en suspension ou en phase gazeuse sont celles qui sont habituellement proposées pour des cas similaires faisant appel à des systèmes catalytiques conventionnels de type Ziegler Natta supporté ou non.

Par exemple pour un procédé de polymérisation en suspension ou en solution, on peut opérer à des températures allant jusqu'à 250°C et sous des pressions allant de la pression atmosphérique à 250 bars. Dans le cas d'un procédé de polymérisation en milieu propylène liquide, les températures peuvent aller jusqu'à la température critique et les pressions peuvent être comprises entre la pression atmosphérique et la pression critique. Pour un procédé de polymérisation en masse conduisant à des polyéthylènes ou à des copolymères majoritaires en éthylène, on peut opérer à des températures comprises entre 130°C et 350°C et sous des pressions allant de 200 à 3500 bars.

Un procédé de polymérisation en phase gazeuse peut être mis en oeuvre à l'aide de tout réacteur permettant une polymérisation en phase gazeuse et en particulier dans un réacteur à lit agité et/ou à lit fluidisé.

Les conditions de mise en oeuvre de la polymérisation en phase gazeuse, notamment température, pression, injection de l'oléfine ou des oléfines dans le réacteur à lit agité et/ou à lit fluidisé, contrôle de la température et de la pression de polymérisation, sont analogues à celles proposées dans l'art antérieur pour la polymérisation en phase gazeuse des oléfines. On opère généralement à une température inférieure au point de fusion Tf du polymère ou prépolymère à synthétiser, et plus particulièrement comprise entre +20°C et (Tf-5)°C, et sous une pression telle que l'oléfine ou les oléfines soient essentiellement en phase vapeur.

Les procédés de polymérisation en solution, en suspension, en masse, ou en phase gazeuse peuvent faire intervenir un agent de transfert de chaînes, de manière à contrôler l'indice de fusion du polymère à produire. Comme agent de transfert de chaîne, on peut utiliser l'hydrogène, que l'on introduit en quantité pouvant aller jusqu'à 90 % et se situant de préférence entre 0,01 et 60 % en mole de l'ensemble oléfine et hydrogène amené au réacteur.

Les oléfines pouvant être utilisées pour la polymérisation ou copolymérisation, sont par exemple les oléfines comportant de deux à vingt atomes de carbone et en particulier les alpha-oléfines de ce groupe. Comme oléfine, on peut citer l'éthylène, le propylène, le 1-butène, le 4-méthyl-1-pentène, le 1-octène, le 1-hexène, le 3-méthyl-1-pentène, le 3-méthyl-1-butène, le 1-décène, le 1-tétradécène, ou leurs mélanges.

Le procédé de polymérisation ou copolymérisation selon l'invention est particulièrement apte à diminuer le taux de solubles dans l'heptane de polymères ou copolymères lorsque le milieu de polymérisation ou copolymérisation comprend une oléfine comprenant au moins trois atomes de carbone. Ce procédé est donc particulièrement adapté à la polymérisation ou copolymérisation du propylène.

Dans les exemples qui suivent, le taux d'insolubles dans l'heptane (représenté par "HI") a été mesuré par extraction du polymère de la fraction soluble par l'heptane bouillant pendant deux heures dans un appareil de type Kumagawa.

### Exemples 1 à 15

### a) préparation de dibromures d'alkylène dimagnésium

Dans un ballon en verre de 500 ml équipé d'un réfrigérant à eau, d'un thermomètre et d'un système d'agitation mécanique, après purge à l'argon, on additionne 0,2 mole de dibromoalcane de formule Br-A-Br sous la forme d'une solution dans 200 ml de diéthyléther anhydre, sur 0,46 moles de magnésium, et on laisse cette préparation sous agitation 6 heures à température ambiante. La préparation est ensuite transférée dans une ampoule à addition.

### b) Préparation de diméthoxysilacycloalcanes.

Dans un ballon en verre de 1,5 litre équipé d'un système d'agitation mécanique, d'un réfrigérant à eau, de l'ampoule à addition contenant la préparation réalisée en a), après purge à l'argon, on ajoute la préparation réalisée en a) en 2 heures sur 0,18 mole de tétraméthoxysilane sous la forme d'une solution dans 400 ml de diéthyléther à température ambiante. Un dégagement de chaleur se produit et un précipité apparaît. Lorsque l'addition est terminée, le mélange est agité pendant 30 minutes, puis porté à reflux pendant 4 heures. Le mélange est ensuite refroidi à la température ambiante, le solide étant éliminé par filtration et lavé à l'éther, toujours sous atmosphère d'argon. L'éther est éliminé à l'évaporateur rotatif à environ 25°C sous une pression de 30 mbars. Le résidu contient un diméthoxysilacycloalcane de formule 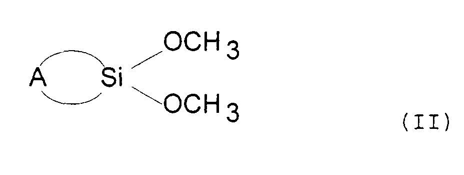 Le tableau 2 donne les points d'ébullition (Eb), sous une pression P, des molécules réalisées, en fonction de la nature des radicaux bivalents A utilisés.

### c) Polymérisations dans le propylène liquide

Dans un réacteur de 8 litres en acier inoxydable, muni d'un système d'agitation et d'une regulation de température, on introduit après purge du réacteur à l'azote, dans l'ordre : 2,5 NI d'hydrogène, 6 litres de propylène liquide, 30 millimoles de triéthylaluminium sous la forme d'une solution dans l'hexane à 1,5 mole/litre puis un diméthoxysilacycloalcane tel que préparé au b), sous la forme d'une solution dans l'hexane à 0,2 mole par litre, de façon à respecter un rapport molaire Al/Si indiqué dans le tableau 2. Après une agitation de 10 minutes à température ambiante, on introduit 40 mg d'une composante catalytique solide préparée comme dans l'exemple 12 du brevet US 5,212,132. Toujours sous agitation, la température du réacteur est ensuite portée à 70 °C en 10 minutes, maintenue une heure à cette température, puis le réacteur est refroidi et décomprimé. Le tableau 2 rassemble les résultats.

### Exemple 16 (comparatif)

Le propylène est polymérisé dans des conditions équivalentes à celle décrite au c) des exemples précédents, sauf qu'aucun alcoxysilacycloalcane n'est introduit dans le milieu de polymérisation. Le tableau 2 rassemble les résultats.

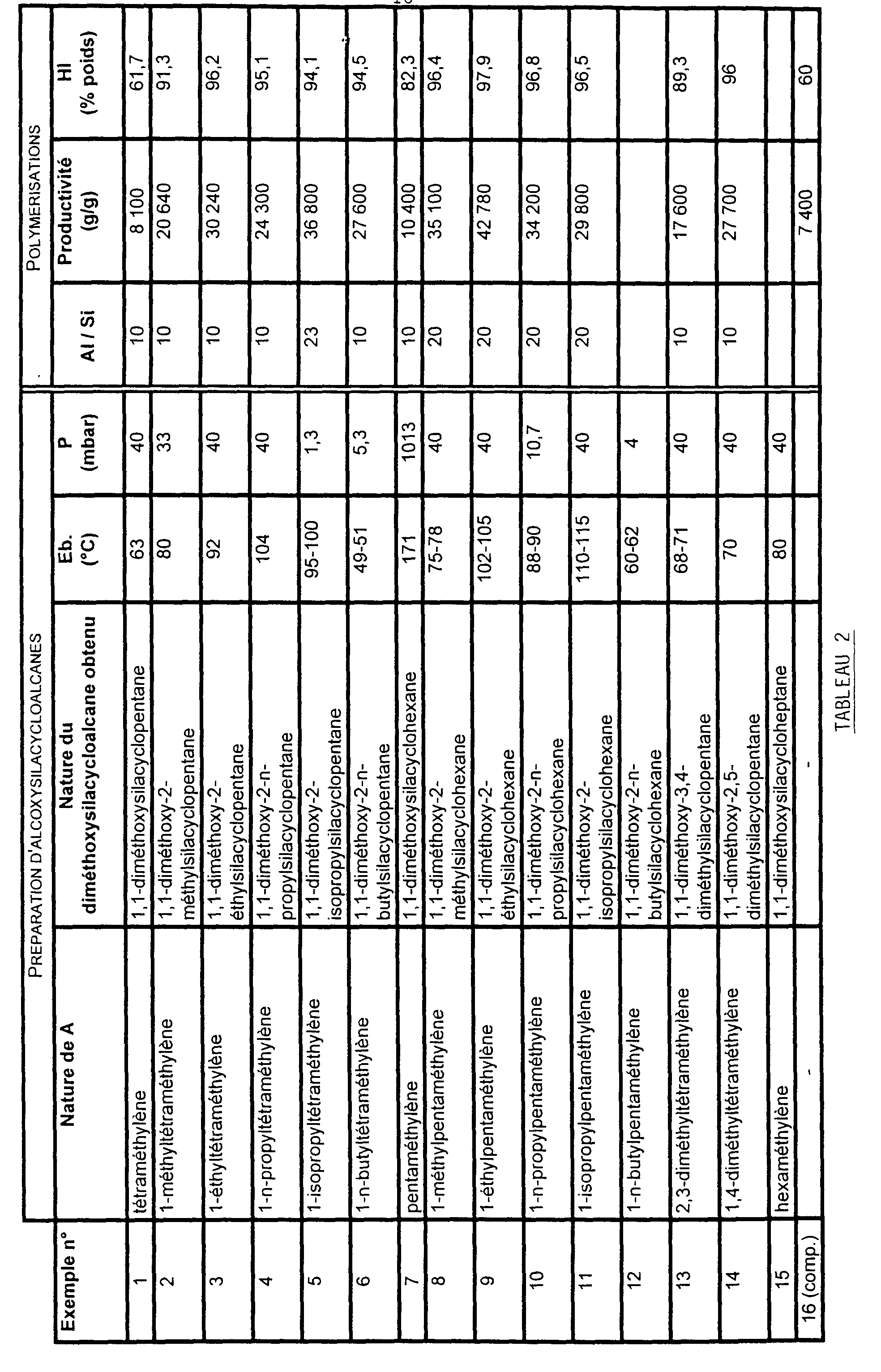

## Revendications

1. Procédé de préparation d'alcoxysilacycloalcanes comprenant une étape de réaction entre un dibromure d'alkylène dimagnésium de formule Br-Mg-A-Mg-Br dans laquelle A est un radical bivalent alkylène comprenant, éventuel(s) substituant(s) exclu(s), de 4 à 7 atomes de carbone, et un tétraalcoxysilane de formule (OR1)(OR2)(OR3)(OR4)Si dans laquelle R¹, R², R³ et R⁴ représentent des radicaux hydrocarbonés.

2. Procédé selon la revendication 1 caractérisé en ce que R¹, R², R³ et R⁴ sont des radicaux alkyles comprenant de 1 à 6 atomes de carbone.

3. Procédé selon la revendication 1 ou 2 caractérisé en ce que la réaction est réalisée en présence d'un solvant présentant un caractère de base de Lewis.

4. Procédé selon la revendication 3 caractérisé en ce que le solvant est un éther.

5. Procédé selon la revendication 4 caractérisé en ce que l'éther est le diéthyléther.

6. Procédé selon l'une des revendications 1 à 5 caractérisé en ce que la réaction est réalisée entre 0 et 50°C.

7. Alcoxysilacycloalcane de formule 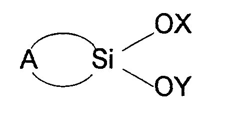 dans laquelle X et Y représentent des radicaux hydrocarbonés et A représente un radical bivalent alkylène comprenant au moins un substituant alkyle, ledit radical bivalent comprenant, substituant(s) exclu(s), de 4 à 7 atomes de carbone.

8. Alcoxysilacycloalcane selon la revendication 7 caractérisé en ce que au moins un substituant alkyle comprend de 1 à 6 atomes de carbone.

9. Alcoxysilacycloalcane selon la revendication 7 ou 8 caractérisé en ce que X et Y sont des radicaux alkyles comprenant de 1 à 6 atomes de carbone.

10. Alcoxysilacycloalcane selon l'une des revendications 7 à 9, caractérisé en ce que au moins un substituant alkyle est en alpha de l'atome de silicium.

11. Alcoxysilacycloalcane selon l'une des revendications 7 à 10 caractérisé en ce que au moins un substituant alkyle comprend au moins deux atomes de carbone.

12. Alcoxysilacycloalcane selon la revendication 11 caractérisé en ce que au moins un substituant alkyle comprend deux ou trois atomes de carbone.

13. Alcoxysilacycloalcane selon l'une des revendications 7 à 12 caractérisé en ce que au moins un substituant alkyle est en alpha de l'atome de silicium et comprend deux atomes de carbone.

14. Alcoxysilacycloalcane selon l'une des revendications 7 à 13 caractérisé en ce que X et Y représentent des radicaux méthyle.

15. 1,1-diméthoxy-2-éthylsilacyclopentane

16. 1,1 -diméthoxy-2-n-propylsilacyclopentane

17. 1,1-diméthoxy-2-isopropylsilacyclopentane

18. 1,1-diméthoxy-2-éthylsilacyclohexane

19. 1,1-diméthoxy-2-n-propylsilacyclohexane

20. 1,1-diméthoxy-2-isopropylsilacyclohexane

21. Procédé de polymérisation ou de copolymérisation d'au moins une oléfine caractérisé en ce qu'un alcoxysilacycloalcane de l'une des revendications 7 à 19 joue le rôle de donneur d'électrons.

22. Procédé selon la revendication 21 caractérisé en ce que l'alcoxysilacycloalcane joue le rôle de donneur externe d'électrons.

23. Procédé selon la revendication 21 ou 22 caractérisé en ce que le milieu de polymérisation ou copolymérisation comprend une composante catalytique solide comprenant un métal de transition.

24. Procédé selon la revendication 23 caractérisé en ce que la composante catalytique solide est à base de magnésium, de chlore et de titane et en ce que le milieu de polymérisation ou copolymérisation comprend un dérivé organique de l'aluminium.

25. Procédé selon l'une des revendications 21 à 24 caractérisé en ce que l'oléfine comprend au moins trois atomes de carbone.

26. Procédé selon la revendication 25 caractérisé en ce que l'oléfine est le propylène.

## Patentansprüche

1. Verfahren zur Herstellung von Alcoxysilacycloalkanen, das einen Schritt umfaßt mit einer Reaktion zwischen einem Alkylendimagnesiumdibromid der Formel Br-Mg-A-Mg-Br, in der A ein zweiwertiger Alkylenrest mit, Substituent(en) gegebenenfalls ausgeschlossen, 4 bis 7 Kohlenstoffatomen ist, und einem Tetraalkoxysilan der Formel (OR¹)(OR²)(OR³)(OR⁴)Si, in der R¹, R², R³ und R⁴ Kohlenwasserstoffreste bedeuten.

2. Verfahren nach Anspruch 1, dadurch gekennzeichnet, daß R¹, R², R³ und R⁴ Alkylreste mit 1 bis 6 Kohlenstoffatomen sind.

3. Verfahren nach Anspruch 1 oder 2, dadurch gekennzeichnet, daß die Reaktion in Gegenwart eines Lösungsmittels durchgeführt wird, das die Eigenschaft einer Lewis-Base hat.

4. Verfahren nach Anspruch 3, dadurch gekennzeichnet, daß das Lösungsmittel ein Ether ist.

5. Verfahren nach Anspruch 4, dadurch gekennzeichnet, daß der Ether Diethylether ist.

6. Verfahren nach einem der Ansprüche 1 bis 5, dadurch gekennzeichnet, daß die Reaktion zwischen 0 und 50 °C durchgeführt wird.

7. Alkoxysilacycloalkan der Formel 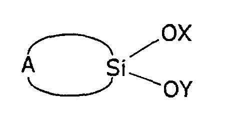 in der X und Y Kohlenwasserstoffreste bedeuten und A einen zweiwertigen Alkylenrest mit mindestens einem Alkylsubstituenten bedeutet, wobei der genannte zweiwertige Rest, Substituent(en) ausgeschlossen, 4 bis 7 Kohlenstoffatome enthält.

8. Alcoxysilacycloalkan nach Anspruch 7, dadurch gekennzeichnet, daß mindestens ein Alkylsubstituent 1 bis 6 Kohlenstoffatome enthält.

9. Alcoxysilacycloalkan nach Anspruch 7 oder 8, dadurch gekennzeichnet, daß X und Y Alkylreste mit 1 bis 6 Kohlenstoffatomen sind.

10. Alkoxysilacycloalkan nach einem der Ansprüche 7 bis 9, dadurch gekennzeichnet, daß mindestens ein Alkylsubstituent in alpha-Stellung zum Siliciumatom ist.

11. Alkoxysilacycloalkan nach einem der Ansprüche 7 bis 10, dadurch gekennzeichnet, daß mindestens ein Alkylsubstituent mindestens zwei Kohlenstoffatome enthält.

12. Alkoxysilacycloalkan nach Anspruch 11, dadurch gekennzeichnet, daß mindestens ein Alkylsubstituent zwei oder drei Kohlenstoffatome enthält.

13. Alkoxysilacycloalkan nach einem der Ansprüche 7 bis 12, dadurch gekennzeichnet, daß mindestens ein Alkylsubstituent in alpha-Stellung zum Siliciumatom ist und zwei Kohlenstoffatome enthält.

14. Alkoxysilacycloalkan nach einem der Ansprüche 7 bis 13, dadurch gekennzeichnet, daß X und Y Methylreste bedeuten.

15. 1,1-Dimethoxy-2-ethylsilacyclopentan

16. 1,1-Dimethoxy-2-n-propylsilacyclopentan

17. 1,1-Dimethoxy-2-isopropylsilacyclopentan

18. 1,1-Dimethoxy-2-ethylsilacyclohexan

19. 1,1-Dimethoxy-2-n-propylsilacyclohexan

20. 1,1-Dimethoxy-2-isopropylsilacyclohexan

21. Verfahren zur Polymerisation oder zur Copolymerisation mindestens eines Olefins, dadurch gekennzeichnet, daß ein Alkoxysilacycloalkan nach einem der Ansprüche 7 bis 19 als Elektronendonator dient.

22. Verfahren nach Anspruch 21, dadurch gekennzeichnet, daß das Alkoxysilacycloalkan als externer Elektronendonator dient.

23. Verfahren nach Anspruch 21 oder 22, dadurch gekennzeichnet, daß das Polymerisations- oder Copolymerisationsmilieu eine feste katalytische Komponente mit einem Übergangsmetall enthält.

24. Verfahren nach Anspruch 23, dadurch gekennzeichnet, daß die feste katalytische Komponente auf Magnesium-, Chlor- und Titanbasis ist und daß das Polymerisations- oder Copolymerisationsmilieu ein organisches Aluminiumderivat enthält.

25. Verfahren nach einem der Ansprüche 21 bis 24, dadurch gekennzeichnet, daß das Olefin mindestens drei Kohlenstoffatome enthält.

26. Verfahren nach Anspruch 25, dadurch gekennzeichnet, daß das Olefin Propylen ist.

## Claims

1. Process for the preparation of alkoxysilacycloalkanes, including a stage of reaction between an alkylenedimagnesium dibromide of formula Br-Mg-A-Mg-Br in which A is a divalent alkylene radical containing from 4 to 7 carbon atoms, optional substituent(s) being excluded, and a tetraalkoxysilane of formula (OR¹) (OR²) (OR³) (OR⁴) Si in which R¹, R², R³ and R⁴ denote hydrocarbon radicals.

2. Process according to Claim 1, characterized in that R¹, R², R³ and R⁴ are alkyl radicals containing from 1 to 6 carbon atoms.

3. Process according to Claim 1 or 2, characterized in that the reaction is carried out in the presence of a solvent exhibiting a Lewis base character.

4. Process according to Claim 3, characterized in that the solvent is an ether.

5. Process according to Claim 4, characterized in that the ether is diethyl ether.

6. Process according to one of Claims 1 to 5, characterized in that the reaction is carried out between 0 and 50°C.

7. Alkoxysilacycloalkane of formula 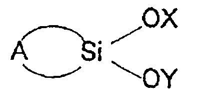 in which X and Y denote hydrocarbon radicals and A denotes a divalent alkylene radical containing at least one alkyl substituent, the said divalent radical containing from 4 to 7 carbon atoms, substituent(s) being excluded.

8. Alkoxysilacycloalkane according to Claim 7, characterized in that at least one alkyl substituent contains from 1 to 6 carbon atoms.

9. Alkoxysilacycloalkane according to Claim 7 or 8, characterized in that X and Y are alkyl radicals containing from 1 to 6 carbon atoms.

10. Alkoxysilacycloalkane according to one of Claims 7 to 9, characterized in that at least one alkyl substituent is positioned alpha to the silicon atom.

11. Alkoxysilacycloalkane according to one of Claims 7 to 10, characterized in that at least one alkyl substituent contains at least two carbon atoms.

12. Alkoxysilacycloalkane according to Claim 11, characterized in that at least one alkyl substituent contains two or three carbon atoms.

13. Alkoxysilacycloalkane according to one of Claims 7 to 12, characterized in that at least one alkyl substituent is positioned alpha to the silicon atom and contains two carbon atoms.

14. Alkoxysilacycloalkane according to one of Claims 7 to 13, characterized in that X and Y denote methyl radicals.

15. 1,1-Dimethoxy-2-ethylsilacyclopentane.

16. 1,1-Dimethoxy-2-n-propylsilacyclopentane.

17. 1,1-Dimethoxy-2-isopropylsilacyclopentane.

18. 1,1-Dimethoxy-2-ethylsilacyclohexane.

19. 1,1-Dimethoxy-2-n-propylsilacyclohexane.

20. 1,1-Dimethoxy-2-isopropylsilacyclohexane.

21. Process for the polymerization or copolymerization of at least one olefin, characterized in that an alkoxysilacycloalkane of one of Claims 7 to 19 acts as an electron-donor.

22. Process according to Claim 21, characterized in that the alkoxysilacycloalkane acts as an external electron-donor.

23. Process according to Claim 21 or 22, characterized in that the polymerization or copolymerization environment includes a solid catalytic component containing a transition metal.

24. Process according to Claim 23, characterized in that the solid catalytic component is based on magnesium, chlorine and titanium and in that the polymerization or copolymerization environment includes an organic aluminium derivative.

25. Process according to one of Claims 21 to 24, characterized in that the olefin contains at least three carbon atoms.

26. Process according to Claim 25, characterized in that the olefin is propylene.
